# EUROPEAN PATENT SPECIFICATION

(11) **EP 2 395 302 B1**
(45) Date of publication and mention of the grant of the patent: **26.12.2018**
(21) Application number: 10738409.1
(22) Date of filing: 20.01.2010
(51) Int. Cl.: F25B 47/02, F24H 1/00, F24H 1/18, F25B 30/02, F24H 6/00, F24D 3/08, F24D 3/18, F24D 19/00, F25B 47/00

(54) **HEAT PUMP-TYPE HOT-WATER SUPPLY AND AIR-CONDITIONING DEVICE**
WÄRMEPUMPENÄHNLICHE WARMWASSERVERSORGUNGS- UND KLIMAANLAGENVORRICHTUNG
DISPOSITIF DE CLIMATISATION ET D'ALIMENTATION EN EAU CHAUDE DE TYPE À POMPE À CHALEUR

(30) Priority: 06.02.2009 JP 2009025946
(43) Date of publication of application: 14.12.2011
(73) Proprietor: MITSUBISHI HEAVY INDUSTRIES THERMAL SYSTEMS, LTD., Tokyo 108-8215 (JP)
(72) Inventor: YAMADA, Hiroyuki, Kiyosu-shi Aichi 452-8561 (JP); TAKEUCHI, Nobuyuki, Kiyosu-shi Aichi 452-8561 (JP); OMURA, Minemasa, Nagoya-shi Aichi 453-8515 (JP)
(74) Representative: Henkel, Breuer & Partner
(86) International application number: PCT/JP2010/050610
(87) International publication number: WO 2010/090071

(56) References cited:
- EP-A1- 2 420 758
- JP-A- 8 152 193
- JP-A- H1 089 816
- JP-A- 10 089 816
- JP-A- 2004 183 908
- JP-A- 2004 183 908
- JP-A- 2006 266 596

## Description

### {Technical Field}

The present invention relates to a heat-pump hot-water supplying and air conditioning apparatus that supplies hot water and performs air conditioning using a heat pump and, in particular, it relates to defrost control of a heat-pump hot-water supplying and air conditioning apparatus that carries out a defrosting operation by switching a refrigerant circuit of the heat pump to a cooling cycle.

### {Background Art}

A heat-pump hot-water supplying and air conditioning apparatus includes a refrigerant system in which a refrigerant fed by a compressor circulates in a closed-circuit refrigerant circuit provided with a heat exchanger, undergoing repeated gas/liquid state changes, and a water system in which water fed by a pump absorbs heat from the refrigerant at the heat exchanger (a water-refrigerant heat exchanger) provided in the refrigerant system, thereby turning into hot water. In such a heat-pump hot-water supplying and air conditioning apparatus, by operating a four-way valve provided in the refrigerant system, one of a heating operation and a cooling operation can be selected by switching the circulation direction of the heated to produce hot water at the water-refrigerant heat exchanger, which serves as a condenser. This hot water may directly be used as a hot water supply or it can also be used as a heat source for hot-water-based heating via a radiator.

In the refrigerant system in the heat-pump hot-water supplying and air conditioning apparatus described above, continuing the heating operation that heats the water to produce hot water at the water-refrigerant heat exchanger results in frost formation on the heat exchanger which serves as an evaporator, thereby lowering the heat-exchange efficiency. Because of this, in a conventional heat-pump hot-water supplying and air conditioning apparatus, a defrosting operation is performed to remove the frost by switching the refrigerant system from the cooling operation to the heating operation as needed to reverse the circulation direction of the refrigerant, thereby making the frosted heat exchanger serve as a condenser.

Related art with regard to a defrosting operation in a heat pump includes, for example, a water heater disclosed in JP 2008-224088A. In this related art, a water-refrigerant heat exchanger serves as an evaporator during a defrosting operation in which the circulation direction of the refrigerant is reversed, thus exhibiting a negative capacity where water is cooled with the refrigerant; therefore, the disclosure includes adjustment of the hot-gas bypass level of the refrigerant during such a defrosting operation, thereby reducing the negative capacity or shortening the defrosting operation time.

JP H10-089816A discloses a heat-pump hot water supplying and air conditioning apparatus with a heat-pump refrigerant system and a water system. The water system is provided with a hot water extraction port at the middle of a hot water reservoir, and also is provided with a passage switching means which is configured to switch a first switching condition where the outflow of the water from the hot water reservoir to a heat exchanger is performed via a water outlet at the bottom of the hot water reservoir, and a second switching condition where the outflow of the hot water is performed via the hot water extraction port. In order to shorten the defrosting time the passage switching means puts the system in the first switching condition when there is a request for hot water supply, while it puts it in the second switching condition when there is a request for defrosting, whereby it lets the hot water flow out from the hot water extraction port so as to circulate the hot water in the heat exchanger, and also it makes a water heat exchanger surrounding the heat exchanger function as an evaporator.
JP 2004-183908A discloses a heat-pump hot water supplying and air conditioning apparatus with a heat-pump refrigerant system and a water system. The system comprises a heat pump unit, a circulation passage for boiling, and a circulation passage for defrosting. While an evaporator as the heat collector of the heat pump unit is being defrosted, the heat pump unit 3 is operated by a reverse cycle, hot water in a hot water storage tank is taken out from an upper part of the hot water storage tank through the circulation passage for boiling and is circulated to a lower part of the hot water storage tank through the circulation passage for defrosting to heat-exchange the heat of the hot water between a heat exchanger for water in the circulation passage for boiling and a heat exchanger for refrigerant for the heat pump unit, and the evaporator functions as a radiator to defrost the evaporator.

### {Summary of Invention}

### {Technical Problem}

In the conventional heat-pump hot-water supplying and air conditioning apparatus, when performing the defrosting operation by switching the refrigerant circulation in the refrigerant circuit to the cooling operation, if the temperature of hot water circulating in the water system (hot-water supplying/heating circuit side) is low, a shortage occurs in the heat source for gasifying the refrigerant at the water-refrigerant heat exchanger. It is preferable not to have such a heat source shortage because it causes a low-pressure drop, which causes a drop in pressure of gas refrigerant that is sucked into the compressor in the refrigerant system or freezing of the hot water from which heat is absorbed in the water-refrigerant heat exchanger.

On the other hand, if only the above-described heat source shortage is taken into consideration, and if, for example, the defrosting operation is carried out by using a heat source (hot water) in a hot-water supply tank that stores heat at a high temperature, the temperature of hot water in the hot-water supply tank ends up being decreased. It is preferable not to have such a decrease in temperature of hot water in the hot-water supply tank because it means a temperature drop in hot water for the hot water supply.

In other words, in a heat-pump hot-water supplying and air conditioning apparatus that performs a defrosting operation by reversing the circulation direction of the refrigerant, unlike a heat-pump air conditioner that performs heat exchange between the refrigerant and air, water is used as a heat conducting material that performs heat exchange with the refrigerant; therefore, when the temperature on the refrigerant side becomes drastically low, there is a possibility that water in the water-refrigerant heat exchanger will partially freeze. Accordingly, in the defrosting operation in which the refrigerant is flowed to the water-refrigerant heat exchanger by carrying out a similar refrigerant circulation as in the cooling operation, it is necessary to maintain the water temperature on the water system side and the pressure saturation temperature on the refrigerant system side at or above a certain temperature.

The present invention has been conceived in light of the above-described circumstances, and an object thereof is to provide a heat-pump hot-water supplying and air conditioning apparatus that is capable of, in a defrosting operation, avoiding the risk of freezing of a water-refrigerant heat exchanger by using a minimum required heat source.

### {Solution to Problem}

In order to solve the above-described problems, the present invention provides a heat-pump hot-water supplying and air conditioning apparatus with the features of claim 1.

The heat-pump hot-water supplying and air conditioning apparatus according to the present invention includes a heat-pump refrigerant system in which refrigerant fed by a compressor circulates in a closed-circuit refrigerant circuit having an outdoor heat exchanger and an indoor heat exchanger, undergoing repeated gas/liquid state changes, and that is capable of selecting a cooling cycle or a heating cycle by switching a circulation direction of the refrigerant that circulates in the refrigerant circuit and a water system provided with a hot-water tank which is connected, via a flow-path switching valve, to a hot-water circulation flow path in which water fed by a pump absorbs heat from the refrigerant at the indoor heat exchanger to be turned into hot water, wherein the hot water is circulated to be used as a hot-water heat source, wherein, in the heat-pump hot-water supplying and air conditioning apparatus that performs a defrosting operation by setting a refrigerant circulation direction in the refrigerant system to the cooling cycle, depending on a detected water temperature of hot water flowing in the water system, one of circulating hot water circulating in the hot-water circulation flow path and stored hot water stored in the hot-water tank is selected as water to be flowed to the indoor heat exchanger during the defrosting operation, and the stored hot water is selected when the detected water temperature is at or below a predetermined water temperature.

With such a heat-pump hot-water supplying and air conditioning apparatus, depending on the detected water temperature of the hot water flowing in the water system, one of the circulating hot water circulating in the hot-water circulation flow path and the stored hot water stored in the hot-water tank is selected as water to be flowed to the water heat exchanger during the defrosting operation. That is, the stored hot water, on one hand, is selected when the detected water temperature is at or below the predetermined water temperature and the circulating hot water, on the other hand, is selected when the detected water temperature is higher than the predetermined water temperature; therefore, it is possible to carry out the defrosting operation while keeping the consumption of the high-temperature stored hot water in the hot-water tank to the minimum.

In the invention, the predetermined water temperature be corrected so as to get higher as the outdoor temperature decreases and, accordingly, it is possible to carry out an efficient defrosting operation by further decreasing the consumption of the high-temperature stored hot water in the hot-water tank.

In the above-described invention, by providing heating means for heating the stored hot water to raise the temperature thereof when its temperature is at or below the predetermined water temperature, it becomes possible to carry out the defrosting operation by reliably obtaining required hot water (heat source).

### {Advantageous Effects of Invention}

With the heat-pump hot-water supplying and air conditioning apparatus described above, in the defrosting operation that is carried out by performing a cooling cycle, when the detected temperature of water flowing on the water system side is higher than a predetermined value, the circulating hot water is used, and the stored hot water is used only when the detected water temperature is at or below the predetermined value; therefore, it becomes possible to carry out the defrosting operation while keeping the consumption of the high-temperature hot water stored in the hot water tank to the minimum. Accordingly, a significant advantage is afforded in that the risk of freezing in a heat exchanger that performs heat exchange between water and refrigerant can be avoided using the minimum required heat source (the stored hot water).

### {Brief Description of Drawings}

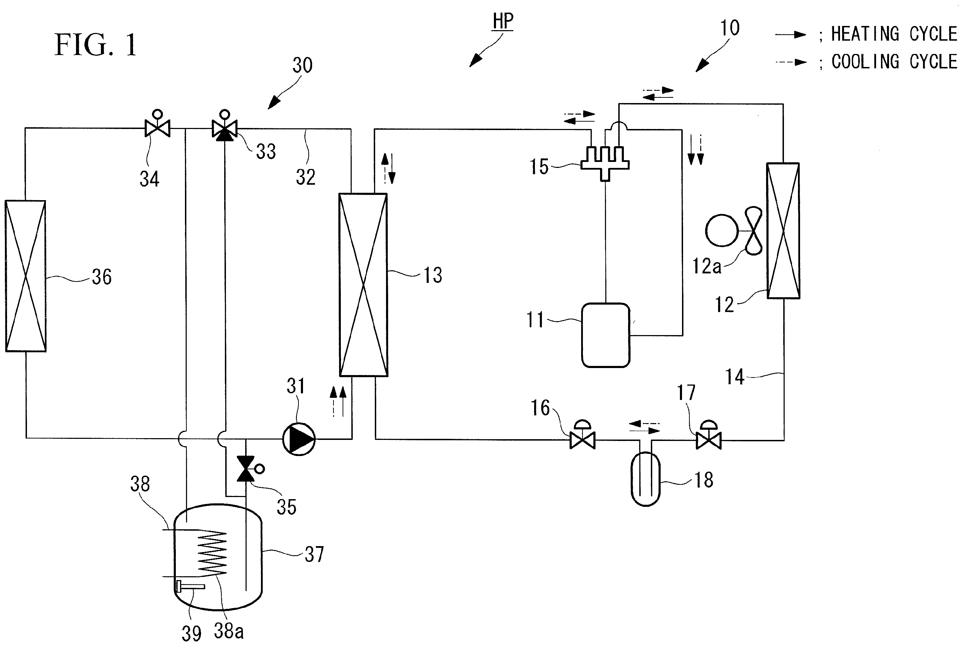

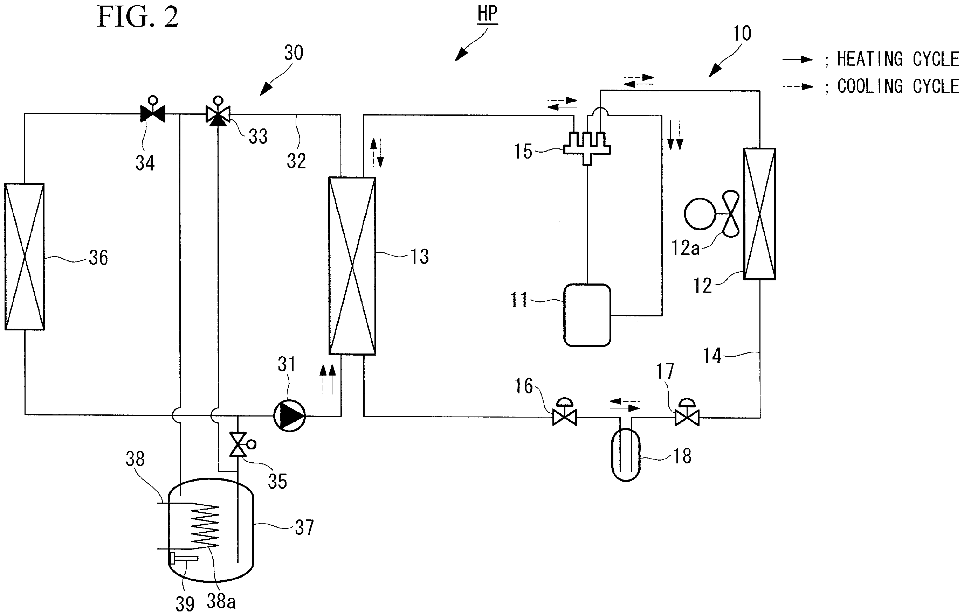

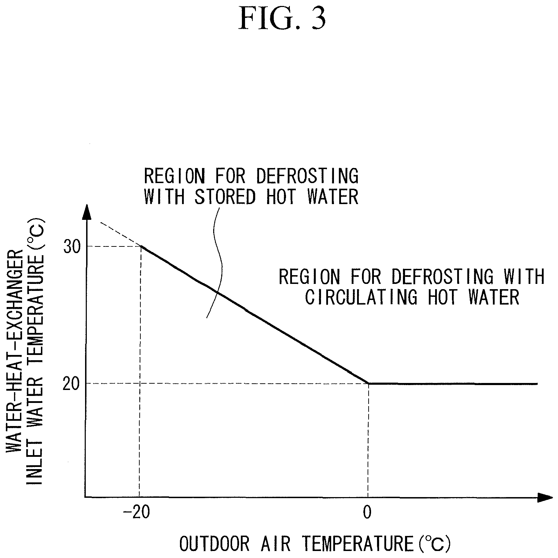

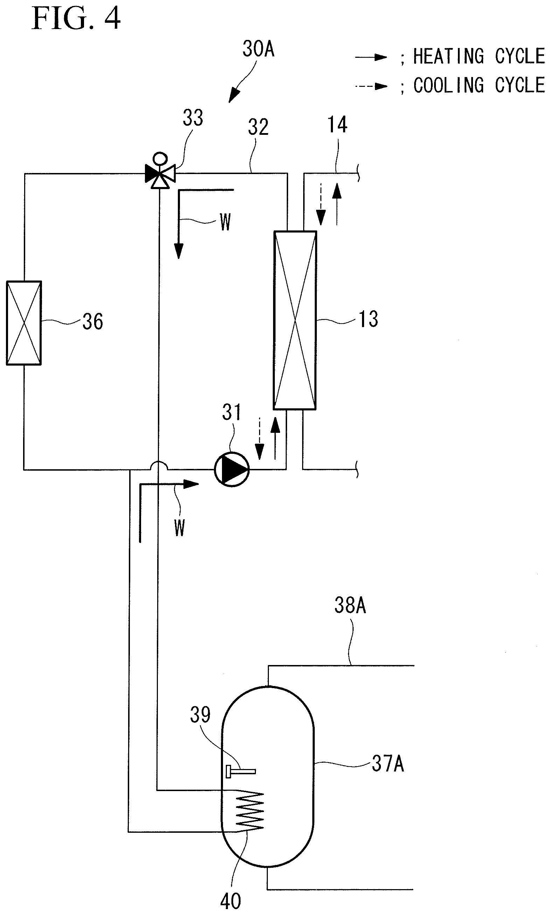

{Fig. 1} Fig. 1 is a system diagram showing an embodiment of a heat-pump hot-water supplying and air conditioning apparatus according to the present invention, showing a state in which a defrosting operation uses circulating hot water.
{Fig. 2} Fig. 2 shows, for the heat-pump hot-water supplying and air conditioning apparatus shown in Fig. 1, a state in which the defrosting operation uses stored hot water.
{Fig. 3} Fig. 3 is a diagram showing an example of a region where the stored hot water is used as defined by a relationship between the outdoor temperature and the water-heat-exchanger inlet water temperature.
{Fig. 4} Fig. 4 is a system diagram of relevant portions showing a modification of the heat-pump hot-water supplying and air conditioning apparatus according to the present invention, showing a state in which the defrosting operation uses the circulating hot water or the stored hot water.

### {Description of Embodiments}

An embodiment of a heat-pump hot-water supplying and air conditioning apparatus according to the present invention will be described below on the basis of the drawings.

In a system diagram of the embodiment shown in Fig. 1, a heat-pump hot-water supplying and air conditioning apparatus HP includes a heat-pump refrigerant system 10 in which a cooling cycle or a heating cycle can be selected by switching the circulation direction of a refrigerant that circulates in a refrigerant circuit and a water system 30 that uses hot water obtained by heating water with a heat pump for supplying hot water and for heating.

In the refrigerant system 10, the refrigerant, which is fed by a compressor 11, circulates in a closed-circuit refrigerant circuit 14 including an outdoor heat exchanger 12 and an indoor heat exchanger 13, undergoing repeated gas/liquid state changes. The illustrated refrigerant circuit 14 is provided with a four-way valve 15 at an outlet side of the compressor 11, and, by operating this four-way valve 15, the circulation direction of the refrigerant is switched to be reversed, thereby making it possible to select one of the clockwise cooling cycle and the counter-clockwise heating cycle. Note that, reference sign 16 provided in the refrigerant circuit 14 denotes an electric expansion valve for cooling, 17 denotes an electric expansion valve for heating, and 18 denotes a receiver.

The water system 30 forms a hot-water circulation flow path 32 in which water fed by a pump 31 absorbs heat from the refrigerant at the indoor heat exchanger (hereinafter also referred to as "water heat exchanger") 13 provided in the refrigerant system 10, to be turned into hot water, wherein this hot water is circulated to be used as a hot-water heat source. The hot-water circulation flow path 32 is provided with, as flow-path switching valves for the hot water, a three-way valve 33, a first solenoid switching valve 34, and a second solenoid switching valve 35.

Furthermore, the above-described hot-water circulation flow path 32 is provided with a radiator 36 that serves as a heating heat exchanger which uses the hot water and a hot-water tank 37 into which the hot water is introduced upon being diverted from the hot-water circulation flow path 32, thus storing heat by storing the hot water. In this case, the radiator 36 is a heat exchanger that provides heating by performing heat exchange between the hot water and indoor air.

The hot-water tank 37 is provided with a sanitary water supply circuit 38 that provides hot water for a hot water supply which is heated by using the stored heat of the stored hot water and an electric heater 39 that is powered as needed.

The sanitary water supply circuit 38 is a hot-water supplying system for supplying hot water in which water supplied by a hot-water supply pump (not shown) absorbs heat when flowing in a heat exchanger 38a in the hot-water tank 37 to be turned into hot water, and this hot water is used as a hot water supply and so forth.

The electric heater 39 is supplementary heating means that is used when the amount of stored heat of the hot water stored in the hot-water tank 37 is low, being at or below a predetermined value. That is, the electric heater 39 is a device that is powered when the stored hot water in the hot-water tank 37 has a predetermined water temperature or less to heat the stored hot water to raise its temperature to a desired temperature.

In the thus-configured water system 30, the above-described three-way valve 33, first solenoid switching 34, and second solenoid switching valve 35 are selectively switched through appropriate open/close operations, thereby making it possible to carry out a heating operation that supplies hot water to the radiator 36 or a heat-storing operation that supplies the hot water to the hot-water tank 37 by selecting one or the other, and, alternatively, to carry out both the heating operation and the heat-storing operation through hot water by dividing the hot water supply between the radiator 36 and the hot-water tank 37.

In the above-described refrigerant system 10, when the heating cycle is selected, low-temperature, low-pressure gas refrigerant is compressed at the compressor 11 and is fed to the refrigerant circuit 14 as high-temperature, high-pressure gas refrigerant. As shown with a solid-line arrow in the drawing, this gas refrigerant is guided to the water heat exchanger 13 by the four-way valve 15 to circulate in the counter-clockwise direction. The water heat exchanger 13 in this case is a heat exchanger that performs heat exchange between water in the water system 30 fed by the pump 31 and the high-temperature, high-pressure gas refrigerant and serves as a condenser in which water is heated by the heat of condensation released by condensation of the refrigerant. As a result, the high-temperature, high-pressure gas refrigerant that flows in the refrigerant system 10 condenses into high-temperature, high-pressure liquid refrigerant (including two phases, that is, gas/liquid) and the water that flows in the water system 30 absorbs heat from the refrigerant, thereby being turned into hot water.

The refrigerant condensed at the water heat exchanger 13 flows into the receiver 18 via the fully-open electric expansion valve for cooling 16. In the receiver 18, gas/liquid separation of the refrigerant is performed and the amount of circulating refrigerant is also adjusted.

The electric expansion valve for heating 17 that decreases the pressure of the high-temperature, high-pressure liquid refrigerant is disposed on the downstream side of the receiver 18. By having the refrigerant pass through the electric expansion valve for heating 17, the pressure of the high-temperature, high-pressure liquid refrigerant is decreased, thereby being turned into low-temperature, low-pressure liquid refrigerant. This liquid refrigerant is guided to the outdoor heat exchanger 12 that serves as an evaporator and is gasified by absorbing heat from outdoor air through heat exchange with the outdoor air. At this time, at an outer circumferential surface of the outdoor heat exchanger 12 that becomes low in temperature, moisture, etc. in the air freezes to form frost thereon; therefore, it becomes necessary to perform a defrosting operation described below at suitable operating time intervals to remove the frost.

By having the low-temperature, low-pressure liquid refrigerant pass through the outdoor heat exchanger 12 in this way, the liquid refrigerant is gasified into low-temperature, low-pressure gas refrigerant. As a result, this gas refrigerant is sucked into the compressor 11 by passing through the four-way valve 15 again. The low-temperature, low-pressure gas refrigerant that has been sucked into the compressor 11 in this way is compressed into high-temperature, high-pressure gas refrigerant again by the compressor 11 and then circulates in the same pathway, undergoing the repeated gas/liquid state changes.

Note that, reference sign 12a in the drawing denotes an external air fan that adjusts the amount of external air (the amount of fed air) that passes through the outdoor heat exchanger 12.

On the other hand, in the above-described refrigerant system 10, when the cooling cycle is selected to perform the defrosting operation, the circulation direction of the refrigerant is switched by operating the four-way valve 15.

That is, as shown with a broken-line arrow in the drawing, the high-temperature, high-pressure gas refrigerant fed from the compressor 11 is guided to the outdoor heat exchanger 12 by the four-way valve 15 to circulate in the clockwise direction. The outdoor heat exchanger 12 in this case serves as a condenser in which heat exchange occurs between the outdoor air and the high-temperature, high-pressure gas refrigerant by which the refrigerant condenses to release heat of condensation. As a result, the high-temperature, high-pressure gas refrigerant condenses into high-temperature, high-pressure liquid refrigerant (including two phases, that is, gas/liquid), and the frost formed in the outdoor heat exchanger 12 melts by receiving the released heat (heat of condensation).

The refrigerant condensed at the outdoor heat exchanger 12 flows into the receiver 18, passing through the fully-open electric expansion valve for heating 17. In the receiver 18, gas/liquid separation of the refrigerant is performed, and the amount of circulating refrigerant is also adjusted.

The electric expansion valve for cooling 16, which decreases the pressure of the high-temperature, high-pressure liquid refrigerant, is disposed on a downstream side of the receiver 18. By having the refrigerant pass through the electric expansion valve for heating 16, the pressure of the high-temperature, high-pressure liquid refrigerant is decreased, thereby being turned into low-temperature, low-pressure liquid refrigerant. Because this liquid refrigerant is guided to the water heat exchanger 13 that serves as an evaporator, the refrigerant is gasified by absorbing heat from the hot water supplied from the water system 30 through heat exchange therewith. As a result, the low-temperature, low-pressure liquid refrigerant becomes low-temperature, low-pressure gas refrigerant and is sucked into the compressor 11 by passing through the four-way valve 15 again. The low-temperature, low-pressure gas refrigerant that has been sucked into the compressor 11 in this way is compressed into high-temperature, high-pressure gas refrigerant by the compressor 11 and then circulates in the same pathway, undergoing the repeated gas/liquid state changes.

In the above-described cooling cycle during the defrosting operation, the water heat exchanger 13 that serves as an evaporator uses the hot water in the water system 30 as a heat source for gasifying the low-temperature, low-pressure liquid refrigerant. That is, depending on the detected water temperature of the hot water flowing in the hot-water circulation flow path 32 of the water system 30, one of the circulating hot circulating in the hot-water circulation flow path 32 and the stored hot water stored in the hot-water tank 37 is selected to be used as the hot water that is flowed into the water heat exchanger 13 during the defrosting operation.

A temperature sensor (not shown) is installed at an inlet or an outlet of the water heat exchanger 13, and the temperature of hot water that is flowing in the hot-water circulation flow path 32 is measured at the inlet or the outlet of the water heat exchanger 13 to be used as the above-described detected water temperature. In addition, when the detected water temperature becomes a low temperature, being at or below the predetermined water temperature, the stored hot water in the hot-water tank 37 is selected as the hot water to be flowed to the water heat exchanger 13 during the defrosting operation. That is, the circulating hot water is used when the detected water temperature is higher than the predetermined water temperature, and the stored hot water in the hot-water tank 37 is used when the detected water temperature is a low temperature, being at or below the predetermined temperature; therefore, with regard to the high-temperature stored hot water in the hot-water tank 37, the defrosting operation can be carried out while keeping the consumption thereof to the minimum.

The water system 30 shown in Fig. 1 shows open/closed states (black filling indicates the closed state) of the three-way valve 33, the first solenoid switching valve 34, and the second solenoid switching valve 35 during the defrosting operation that uses the circulating hot water. In this case, the first solenoid switching valve 34 is open, the second solenoid switching valve 35 is closed, and, with regard to the three-way valve 33, a flow path that leads to the first solenoid switching valve 34 from the water heat exchanger 13 is open. As a result, through the operation of the pump 31, the circulating hot water that is circulating in the hot-water circulation flow path 32 is supplied to the water heat exchanger 13, and the stored hot water remains stored in the hot-water tank 37. After gasifying the refrigerant at the water heat exchanger 13 by heating it, the circulating hot water supplied to the water heat exchanger 13 passes through the three-way valve 33, the first solenoid switching valve 34, and the radiator 36 to be sucked into the pump 31 again, thus circulating in the hot-water circulation flow path 32.

The water system 30 shown in Fig. 2 shows open/closed states (black filling indicates the closed state) of the three-way valve 33, the first solenoid switching valve 34, and the second solenoid switching valve 35 during the defrosting operation that uses the stored hot water. In this case, the first solenoid switching valve 34 is closed, the second solenoid switching valve 35 is open, and, with regard to the three-way valve 33, a flow path that leads to the first solenoid switching valve 34 from the water heat exchanger 13 is open. As a result, through the operation of the pump 31, the stored hot water in the hot-water tank 37 is supplied to the water heat exchanger 13 via the second solenoid switching valve 35. After gasifying the refrigerant at the water heat exchanger 13 by heating it, the stored hot water is returned to the hot-water tank 37 via the three-way valve 33.

Such a defrosting operation is carried out by switching the heating cycle to the cooling cycle by operating the four-way valve 15 to reverse the circulation direction of the refrigerant; however, it is desirable that the rotation speed of the compressor 11 be dropped to the lowest at the point when the four-way valve 15 is operated. That is, by performing control that decreases the rotation speed of the compressor 11 before carrying out the switching operation of the four-way valve 15, it is possible to prevent the occurrence of a drastic low-pressure drop in the defrosting operation following the switching operation of the four-way valve 15.

In addition, during the defrosting operation, the electric expansion valve for cooling 16 is fully opened upon starting the defrosting operation, thereby establishing a refrigerant flow path in the refrigerant circuit 14. At this time, the circulating hot water or the stored hot water may be selected as the hot water to be flowed into the water heat exchanger 13 using the detected water temperature detected at the inlet or the outlet of the water heat exchanger 13 with the predetermined water temperature as the reference; however, as shown in Fig. 3, for example, the selection may be made in consideration of the relationship between the detected outdoor air temperature and the detected water temperature.

In the example shown in Fig. 3, when the outdoor air temperature and the detected water temperature (water-heat-exchanger inlet water temperature) detected at the inlet of the water heat exchanger 13 are in a region below a boundary, it is determined that the temperature of the circulating hot water is low and thus the stored hot water in the hot-water tank 37 is selected; and, when the temperatures are in other regions, the circulating hot water is selected.

Here, with regard to values that define the boundary in Fig. 3, a lower limit of the water-heat-exchanger inlet water temperature (20 °C) is a lower limit value of the operational temperature range; an upper limit of the water-heat-exchanger inlet water temperature (30 °C) is a water temperature that is required to avoid an evaporation saturation temperature at which partial freezing in the water heat exchanger 13 begins at a lower limit of the outdoor air temperature; and the lower limit of the outdoor air temperature (-20 °C) is a lower limit value of the operational temperature range. In addition, the outdoor air temperature at an inflection point of the boundary (0 °C) is a point of intersection between a selection boundary (inclined straight line) where circulating hot water/stored hot water selection is switched and the lower limit of the water-heat-exchanger inlet water temperature (20 °C); for this selection boundary, the upper limit of the water-heat-exchanger inlet water temperature is lowered as the outdoor air temperature increases. Therefore, the selection boundary is corrected with respect to the above-described predetermined value so as to get higher as the outdoor air temperature decreases. In addition, although there is no essential need to consider a region in which the water-heat-exchanger inlet water temperature and the outdoor air temperature are below the lower limit values of the operational temperature ranges because it is outside of a usage range, in consideration of cases in which departures from the usage range transiently occur, such as during start-up of the system, in the region below the boundary, a switch is made to the defrosting operation that uses the stored hot water regardless of whether temperatures fall inside or outside of the usage range defined by the system.

Note that, the water-heat-exchanger inlet water temperature is used as the reference for a stored-hot-water selection region (region below the boundary) in Fig. 3; however, it is also possible to define the stored-hot-water selection region using the water-heat-exchanger outlet water temperature as a reference.

In addition, when the temperature of the circulating hot water is low and the stored hot water is selected, if the water temperature of hot water detected by the temperature sensor (not shown) built into the hot-water tank 37 or the water-heat-exchanger inlet water temperature after the completion of switching is low, falling in the region below the boundary (see Fig. 3), it is possible to determine that the stored hot water is also in a state in which it does not have a sufficient water temperature.

Accordingly, the electric heater 39 that is provided inside the hot-water tank 37 as supplementary heating means is powered to heat the stored hot water therein to raise its temperature. That is, because the hot-water tank 37 is provided with the electric heater 37 that heats the stored hot water when it is at or below the predetermined water temperature, thereby raising the stored hot water to a desired temperature, by using the stored hot water heated by the electric heater 39, it is possible to carry out the defrosting operation by reliably obtaining hot water that serves as the heat source required for gasifying the refrigerant.

Incidentally, in the embodiment described above, the high-temperature hot water is stored (heat is stored) in the hot-water tank 37 and hot water is supplied by heating the water flowing in the sanitary water supply circuit 38 using this stored hot water as the heat source; however, the defrosting operation of the present invention is also applicable to, for example, as in another embodiment shown in Fig. 4, a water system 30A in which water in a hot-water tank 37A is heated to be used as hot water for a hot water supply.

The water system 30A shown in Fig. 4 supplies hot water by directly flowing the hot water stored in the hot-water tank 37A in a sanitary water supply circuit 38A, and hot water supplied from the water heat exchanger 13 in the heating cycle is used to heat the hot water stored in the hot-water tank 37A via a heat exchanger 40.

When performing a defrosting operation in the thus-configured water system 30A, in the case of using the stored hot water for raising the temperature of hot water to be supplied to the water heat exchanger 13, the flow path of the hot water is switched as shown with an arrow W in the drawing by operating the three-way valve 33. As a result, low-temperature circulating hot water flows so as to pass through the hot-water tank 37A and, when passing through the inside of the hot-water tank 37A, its temperature is raised by receiving heat from the stored hot water via the heat exchanger 40. Note that, when the stored hot water in the hot-water tank 37A does not have sufficient heating capacity, as in the above-described embodiment, the stored hot water should be heated to raise its temperature by powering the electric heater 39.

In this way, with the present invention described above, instead of always using the circulating hot water as the heat source to be supplied to the water heat exchanger 13 during a defrosting operation, one of the circulating hot water and the stored hot water is selected to be used on the basis of the detected water temperature detected at the inlet or the outlet of the water heat exchanger 13 or the detected water temperature corrected with the outdoor air temperature; therefore, by normally using the circulating hot water, it becomes possible to carry out the defrosting operation while keeping the consumption of the high-temperature stored hot water in the hot-water tank to the minimum. Accordingly, the minimum required heat source (stored hot water) is used during the defrosting operation, thereby making it possible to avoid the risk of freezing which has been a concern for the indoor heat exchanger (water heat exchanger) 13 that performs heat exchange between water and refrigerant.

Note that, the present invention is not limited to the above-described embodiments, and appropriate alterations can be made within a range that does not depart from the scope of appended claims.

### {Reference Signs List}

10 refrigerant cycle
11 compressor
12 outdoor heat exchanger
12a outdoor-unit fan
13 indoor heat exchanger (water heat exchanger)
14 refrigerant circuit
15 four-way valve
16 electric expansion valve for cooling
17 electric expansion valve for heating
18 receiver
30, 30A water system
31 pump
32 hot-water circulation flow path
33 three-way valve
34 first solenoid switching valve
35 second solenoid switching valve
36 radiator
37, 37A hot-water tank
38, 38A sanitary water supply circuit
38a, 40 heat exchanger
39 electric heater
HP heat-pump hot-water supplying and air conditioning apparatus

## Claims

1. A heat-pump hot-water supplying and air conditioning apparatus (HP) comprising:
a heat-pump refrigerant system (10) configured such that refrigerant fed by a compressor (11) can circulate in a closed-circuit refrigerant circuit (14) having an outdoor heat exchanger (12) and an indoor heat exchanger (13), undergoing repeated gas/liquid state changes, and that is capable of selecting a cooling cycle or a heating cycle by switching a circulation direction of the refrigerant that circulates in the refrigerant circuit (14); and
a water system (30) provided with a hot-water tank (37) which is connected, via a flow-path switching valve (33-35), to a hot-water circulation flow path (32) in which water fed by a pump can absorb heat from the refrigerant at the indoor heat exchanger (13) to be turned into hot water, the hot water being circulated to be used as a hot-water heat source, **characterized in that** the heat-pump hot-water supplying and air conditioning apparatus (HP) is configured such that, when the heat-pump hot-water supplying and air conditioning apparatus (HP) performs a defrosting operation by setting a refrigerant circulation direction in the refrigerant system (10) to the cooling cycle, depending on a detected water temperature of hot water flowing in the water system (30), one of circulating hot water circulating in the hot-water circulation flow path (32) and stored hot water stored in the hot-water tank (37) is selected as water to be flowed to the indoor heat exchanger (13) during the defrosting operation, and the stored hot water is selected when the detected water temperature is at or below a predetermined water temperature, and
wherein the predetermined water temperature is corrected so as to get higher as the outdoor air temperature decreases.

2. A heat-pump hot-water supplying and air conditioning apparatus (HP) according to Claim 1, comprising heating means (39) that is configured to heat the stored hot water to raise the temperature thereof when the temperature thereof is at or below the predetermined water temperature.

## Patentansprüche

1. Eine Wärmepumpen-Warmwasserversorgungs- und Klimaanlagenvorrichtung (HP) mit:
einem Wärmepumpenkühlsystem (10), das so konfiguriert ist, das durch einen Kompressor (11) zugeführtes Kältemittel in einem geschlossenen Kältemittelkreislauf (14) zirkulieren kann, welcher einen Außen-Wärmetauscher (12) und einen Innen-Wärmetauscher (13) besitzt, so dass es wiederholten Gas/Flüssigkeitszustandswechseln unterzogen wird, und das einen Kühlkreislauf oder einen Heizkreislauf durch Umschalten einer Zirkulationsrichtung des Kältemittels, das in dem Kältemittelkreislauf (14) zirkuliert, auswählen kann, und
einem Wassersystem (30), das mit einem Warmwassertank (37) versehen ist, der über ein Strömungsweg-Umschaltventil (33-35) mit einem Warmwasser-Zirkulationsströmungsweg (32) verbunden ist, in dem durch eine Pumpe gefördertes Wasser Wärme von dem Kältemittel an dem Innen-Wärmetauscher (13) aufnehmen kann, um zu warmem Wasser geändert zu werden, wobei das warme Wasser zur Verwendung als Warmwasserwärmequelle zirkuliert wird,
**dadurch gekennzeichnet, dass**
die Wärmepumpen-Warmwasserversorgungs- und Klimaanlagenvorrichtung (HP) so konfiguriert ist, dass wenn die Wärmepumpen-Warmwasserversorgungs- und Klimaanlagenvorrichtung (HP) durch Einstellen einer Kältemittelzirkulationsrichtung in dem Kältemittelsystem (10) zu dem Kühlkreislauf eine Abtauoperation ausführt, abhängig von einer erfassten Wassertemperatur des in dem Wassersystem (30) strömenden Warmwassers, entweder zirkulierendes Warmwasser, das in dem Warmwasserzirkulationsströmungsweg (32) zirkuliert, oder gespeichertes Warmwasser, das in dem Warmwassertank (37) gespeichert ist, als Wasser ausgewählt wird, das zu dem Innen-Wärmetauscher (13) während der Abtauoperation strömen soll, und das gespeicherte Warmwasser ausgewählt wird, wenn die erfasste Wassertemperatur bei oder unter einer vorbestimmten Wassertemperatur ist, und
wobei die vorbestimmte Wassertemperatur so korrigiert wird, dass sie höher wird, wenn die Außenlufttemperatur abnimmt.

2. Eine Wärmepumpen-Warmwasserversorgungs- und Klimaanlagenvorrichtung (HP) gemäß Anspruch 1 mit einem Heizmittel (39), das konfiguriert ist, um das gespeicherte Warmwasser zu erwärmen, um dessen Temperatur anzuheben, wenn die Temperatur desselben sich bei oder unter der vorbestimmten Wassertemperatur befindet.

## Revendications

1. Installation (HP) à pompe à chaleur fournissant de l'eau chaude et de conditionnement d'air comprenant :
un système (10) de réfrigération à pompe à chaleur configuré de manière à ce que du réfrigérant envoyé par un compresseur (11) puisse circuler dans un circuit (14) de réfrigérant, en circuit fermé, ayant un échangeur de chaleur (12) de sortie et un échangeur de chaleur (13) d'entrée, subissant des changements d'état gaz/liquide répétés et qui est capable de sélectionner un cycle de refroidissement ou un cycle de chauffage en commutant un sens de circulation du réfrigérant, qui circule dans le circuit (14) réfrigérant et
un système (30) d'eau pourvu d'un réservoir (37) d'eau chaude qui est relié, par l'intermédiaire d'une vanne (33 à 35) de commutation du trajet d'écoulement, à un trajet (32) d'écoulement de circulation d'eau chaude dans lequel de l'eau envoyée par une pompe peut absorber de la chaleur du réfrigérant à l'échangeur de chaleur (13) d'entrée pour être transformée en de l'eau chaude, l'eau chaude étant mise en circulation pour être utilisée comme une source de chaleur à eau chaude,
**caractérisée en ce que**
l'installation (HP) à pompe à chaleur fournissant de l'eau chaude et de conditionnement d'air est configurée de manière à ce que, lorsque l'installation (HP) à pompe à chaleur fournissant de l'eau chaude et de conditionnement effectue une opération de dégivrage, en fixant un sens de circulation du réfrigérant dans le système (10) réfrigérant vers le cycle de refroidissement, en fonction d'une température détectée de l'eau chaude passant dans le système (30) d'eau, l'une de l'eau chaude en circulation circulant dans le trajet (32) d'écoulement de circulation d'eau chaude et de l'eau chaude stockée dans le réservoir (37) d'eau chaude est choisie comme eau à envoyer à l'échangeur de chaleur (13) d'entrée pendant l'opération de dégivrage et l'eau chaude stockée est sélectionnée lorsque la température détectée de l'eau est à une température déterminée à l'avance ou en dessous de cette température et
dans laquelle la température déterminée à l'avance de l'eau est corrigée de manière à devenir plus haute au fur et à mesure que la température de l'air de sortie s'abaisse.

2. Installation (HP) à pompe à chaleur fournissant de l'eau chaude et de conditionnement d'air suivant la revendication 1, comprenant un moyen (39) de chauffage configuré pour chauffer l'eau chaude stockée, pour en élever la température lorsque sa température est à une température de l'eau déterminée à l'avance ou en dessous de celle-ci.
